# EUROPEAN PATENT SPECIFICATION

(11) **EP 4 119 619 B1**
(45) Date of publication and mention of the grant of the patent: **14.10.2026**
(21) Application number: 22181482.5
(22) Date of filing: 28.06.2022
(51) Int. Cl.: G02B 1/18, C09D 4/00, C08F 222/10

(54) **CAMERA COVER, IMAGE CAPTURING DEVICE, AND METHOD OF MANUFACTURING CAMERA COVER**
KAMERAABDECKUNG, BILDAUFNAHMEVORRICHTUNG UND VERFAHREN ZUM HERSTELLEN EINER KAMERAABDECKUNG
COUVERCLE DE CAMÉRA, DISPOSITIF DE CAPTURE D'IMAGES, ET PROCÉDÉ DE FABRICATION D'UN COUVERCLE DE CAMÉRA

(30) Priority: 12.07.2021 JP 2021115148
(43) Date of publication of application: 18.01.2023
(73) Proprietor: Canon Kabushiki Kaisha, Ohta-ku Tokyo 146-8501 (JP)
(72) Inventor: KAMIGUCHI, Kinya, Ohta-ku, 146-8501 (JP)
(74) Representative: TBK

(56) References cited:
- EP-A1- 3 671 292
- WO-A1-2012/026245
- WO-A1-2019/230139
- JP-A- 2016 164 265
- JP-A- 2017 065 068
- US-A1- 2006 099 385
- US-A1- 2008 026 182

## Description

### BACKGROUND OF THE INVENTION

### Field of the Invention

The present invention relates to a camera cover and an image capturing device, as well as a method of manufacturing a camera cover, and particularly relates to a camera cover for a surveillance camera installed outdoors.

### Description of the Related Art

Surveillance cameras are widely used as security systems in residential or commercial buildings or outdoors. A surveillance camera includes a transparent camera cover for protection from rainwater, pebbles, and the like. The camera cover may be scratched by flying sand or during maintenance when soiled with dirt or the like, and scratches on the camera cover may reduce the quality of captured images.

Accordingly, a technique is known in which a camera cover is made scratch-resistant by applying a coating to the camera cover. For example, Japanese Patent Laid-Open No. 9-255917 and JP 2016 164265 A disclose a hard coating with silicone resin.

### SUMMARY OF THE INVENTION

The present invention in its first aspect provides a camera cover as specified in claims 1 to 5.

The present invention in its second aspect provides an image capturing device as specified in claim 6.

The present invention in its third aspect provides of a method of manufacturing a camera cover as specified in claims 7 to 9.

Further features of the present invention will become apparent from the following description of exemplary embodiments (with reference to the attached drawings).

### BRIEF DESCRIPTION OF THE DRAWINGS

FIG. 1 is a schematic diagram of an image capturing device according to an embodiment.
FIG. 2 is a descriptive diagram of a camera cover according to an embodiment.
FIG. 3 is a partial cross-sectional view of a camera cover part according to an embodiment.
FIG. 4 is a diagram illustrating a coating application method.
FIG. 5 is a flowchart illustrating a method of manufacturing a camera cover according to an embodiment.
FIG. 6 is a diagram illustrating a relationship between a viscosity of a coating liquid and a thickness of a coating.
FIG. 7 is a diagram illustrating a relationship between a thickness of a coating and an arithmetic mean roughness Ra.
FIG. 8 is a diagram illustrating a resolution evaluation in a seventh working example.
FIG. 9 is a diagram illustrating a resolution evaluation in an eighth working example.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

The hard coating with the silicone resin described in Japanese Patent Laid-Open No. 9-255917 has problems in that cracks may occur after film deposition and that the cost is high due to the long baking time required.

According to an embodiment of the present invention, it is possible to obtain a camera cover that is easy to manufacture and can provide a sufficient resolution.

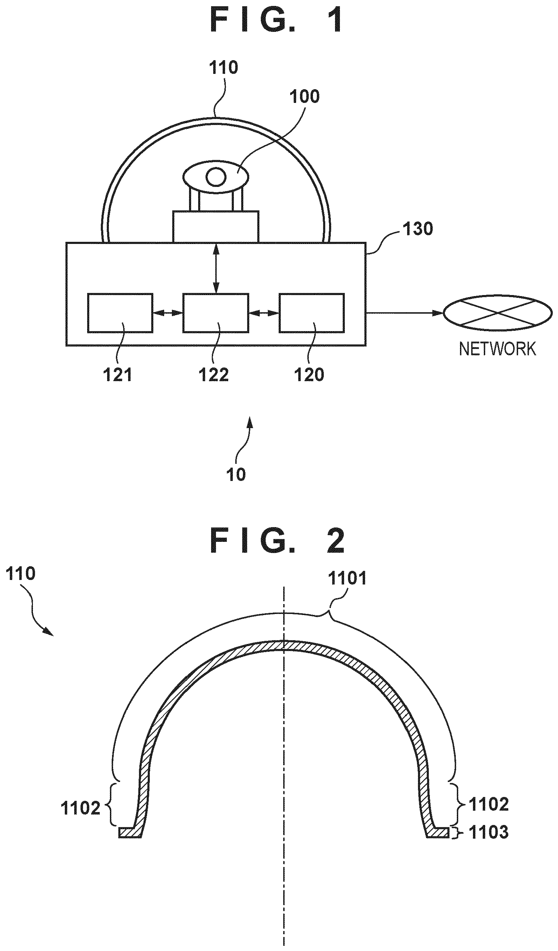

FIG. 1 is a diagram illustrating an overview of an image capturing device 10 according to one embodiment of the present invention. The image capturing device 10 illustrated in FIG. 1 includes a camera unit 100, a data transfer unit 120, a data storage unit 121, and a controller 122. Images captured by the camera unit 100 can be transferred to a network via the controller 122 and the data transfer unit 120. Images captured by the camera unit 100 can be stored in the data storage unit 121 by transferring the images to the data storage unit 121 via the controller 122. The data transfer unit 120, the data storage unit 121, and the controller 122 are covered by an outer housing 130 for protection from external impacts and to prevent moisture from entering.

In one embodiment of the present invention, the camera unit 100 is covered by a camera cover 110. The camera cover 110 according to the present embodiment is a dome-shaped camera cover that protects an image capturing unit, and has a coating 1500 including an aliphatic urethane acrylate resin formed on a surface. This camera cover 110 can protect the camera unit 100 from external impacts and prevent moisture from entering. The specific shape of the camera cover 110 is not particularly limited. For example, the camera cover 110 can have an outer wall part and an opening, and the outer wall part can define an interior space that communicates with the opening. In this case, as illustrated in FIG. 1, the camera unit 100 can be protected by housing the camera unit 100 within the interior space of the camera cover 110 and closing off the opening using a member such as the outer housing 130. In one embodiment, the camera cover 110 has a roughly hemispherical shape.

FIG. 2 is a cross-sectional view illustrating an example of the camera cover 110. The camera cover 110 has a substantially hemispherical part 1101 in a central area. A skirt part 1102 is present near the edge of the substantially hemispherical part 1101, and furthermore, a flange 1103 is provided at the end. The camera cover 110 can be attached to the outer housing 130 by screwing and fixing the flange 1103 to the outer housing 130 via an O-ring. In the example in FIG. 2, the coating 1500 can be applied over the entirety of a dome 140, including the spherical outer surface of the substantially hemispherical part 1101.

The camera cover 110 has the dome 140, which is a dome-shaped camera cover substrate, and the coating 1500, which is formed on the surface thereof. To ensure that the camera unit 100 can capture images, the dome 140 is formed of a transparent resin material. The type of the dome 140 is not particularly limited, and the dome 140 may be made of polycarbonate resin, acrylic resin, or polyester resin. In one embodiment, the dome 140 is made of polycarbonate resin, which is resistant to impacts. For example, the material constituting the dome 140 may contain polycarbonate, and at least 50% or 90% (by weight) of the material constituting the dome 140 may be polycarbonate. The dome 140 may consist substantially of polycarbonate.

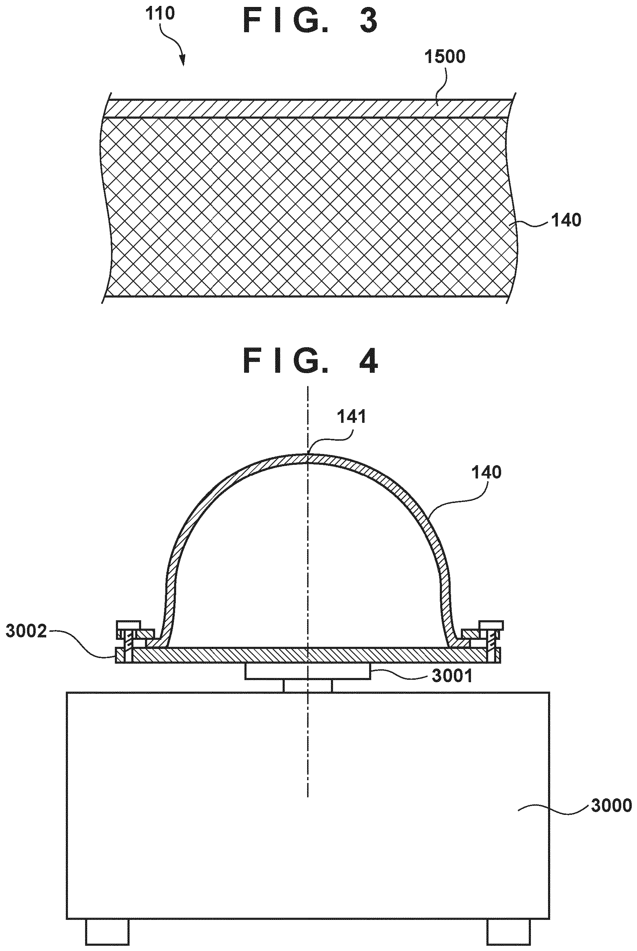

FIG. 3 is a partial cross-sectional view of the camera cover 110 according to one embodiment. As illustrated in FIG. 3, the coating 1500 is formed on the surface of the camera cover 110. In the present embodiment, the coating 1500 is a coating containing an aliphatic urethane acrylate resin. The coating containing an aliphatic urethane acrylate resin used in one embodiment is hard and is resistant to scratching, and can therefore be called a "hard coating". Because aliphatic urethane acrylate resins can be photocured (UV-cured), the coating 1500 can be formed at low cost. Using an aliphatic urethane acrylate resin, which has a short drying time when applied, makes it possible to formed the coating 1500 at an even lower cost.

"Aliphatic urethane acrylate resin" refers to a resin having urethane bonds and acrylic groups (including methacrylic groups), or a resin that is photocured from such a resin. A An aliphatic urethane acrylate resin is obtained, for example, by reacting a compound having an acrylic group (including methacrylic groups) and hydroxyl groups, a polyisocyanate compound (including polyisocyanurate), and, if necessary, a polyol.

In the present invention, an aliphatic urethane acrylate resin is used. "Aliphatic urethane acrylate resin" refers to a urethane acrylate resin obtained by using an aliphatic diisocyanate as an isocyanate unit. An aliphatic urethane acrylate resin is less likely to yellow in weather resistance tests, which makes it possible to improve the weather resistance of the camera cover. An aliphatic urethane acrylate resin that does not contain a benzene ring as a constitutional unit is used to improve the weather resistance of the camera cover.

One example of an aliphatic urethane acrylate resin is an aliphatic urethane acrylate oligomer obtained by reacting (meth)acrylate with polyisocyanate, or a resin obtained by curing this oligomer, as described in Japanese Patent Laid-Open No. 2009-62423.

The aliphatic urethane acrylate resin may also contain a photo-radical polymerization initiator to promote the photocuring of the aliphatic urethane acrylate resin. The type of photo-radical polymerization initiator is not particularly limited, and an α-hydroxyalkylphenone such as 1-hydroxycyclohexylphenyl ketone, benzophenones, or the like can be given as an example.

In the present embodiment, an arithmetic mean roughness Ra of the surface of the coating 1500 is less than 0.8 [µm]. The inventors of the present application found that by forming the coating 1500 such that the arithmetic mean roughness Ra thereof is no greater than 0.8 [µm], a reduction in the resolution achieved when capturing an image through the camera cover 110 is suppressed. Using the arithmetic mean roughness Ra makes it easier to evaluate mottling of the surface of the coating, caused by variations in film thickness, rather than localized surface mottling such as scratches. In the present specification, the arithmetic mean roughness Ra can be measured according to JIS B0601:2013.

Additionally, in one embodiment, the thickness of the coating 1500 is at least 2 [µm]. The inventors of the present application found that the function of the coating 1500 can be sufficiently achieved by forming the coating 1500 such that the thickness is at least 2 [µm]. For example, the coating 1500 may contain an ultraviolet absorbing agent. In particular, if the dome 140 is made of polycarbonate, the weather resistance of the dome 140 can be increased by having the coating 1500 contain an ultraviolet absorbing agent. In this case, weather resistance of the coating 1500 can be sufficiently achieved by forming the coating 1500 such that the thickness is at least 2 [µm]. On the other hand, the thickness of the coating 1500 can be no greater than 10 [µm] in order to reduce the arithmetic mean roughness Ra of the surface of the coating 1500. By making the coating 1500 thinner, the arithmetic mean roughness Ra can be suppressed and the optical effects resulting from the camera cover 110 can be suppressed.

In the present specification, the arithmetic mean roughness Ra and the thickness at a peripheral part of the camera cover 110 can be used as the arithmetic mean roughness Ra and the thickness of the coating 1500. For example, the arithmetic mean roughness Ra and the thickness can be measured at the skirt part 1102 of the substantially hemispherical part 1101. If the arithmetic mean roughness Ra is no greater than a predetermined value in the peripheral part of the camera cover 110, the arithmetic mean roughness Ra of the camera cover 110 can be determined to be no greater than the predetermined value. Similarly, if the thickness is at least a predetermined value or no greater than a predetermined value at the peripheral part of the camera cover 110, the thickness of the camera cover 110 can be determined to be at least the predetermined value or no greater than the predetermined value. The arithmetic mean roughness Ra and the thickness of the peripheral part of the camera cover 110 can be evaluated at one point on the outer surface of the camera cover 110 at an edge of an imaging capturing range of the camera unit 100, or at a plurality of points along the edge.

In one embodiment, if the arithmetic mean roughness Ra is no greater than a predetermined value in both the top part and the peripheral part of the camera cover 110, the arithmetic mean roughness Ra of the camera cover 110 can be determined to be no greater than the predetermined value. Similarly, if the thickness is at least a predetermined value or no greater than a predetermined value in both the top part and the peripheral part of the camera cover 110, the thickness of the camera cover 110 can be determined to be at least the predetermined value or no greater than the predetermined value.

In one embodiment, the arithmetic mean roughness Ra is no greater than 0.8 [µm] in the entire part of the outer surface of the camera cover 110 that is within an imaging capturing range of the camera unit 100, or in the entire outer surface of the camera cover 110. Additionally, in one embodiment, the thickness of the coating 1500 is at least 2 [µm] in the entire part of the outer surface of the camera cover 110 that is within an imaging capturing range of the camera unit 100, or in the entire outer surface of the camera cover 110. Furthermore, in one embodiment, the thickness of the coating 1500 is no greater than 10 [µm] in the entire part of the outer surface of the camera cover 110 that is within an imaging capturing range of the camera unit 100, or in the entire outer surface of the camera cover 110.

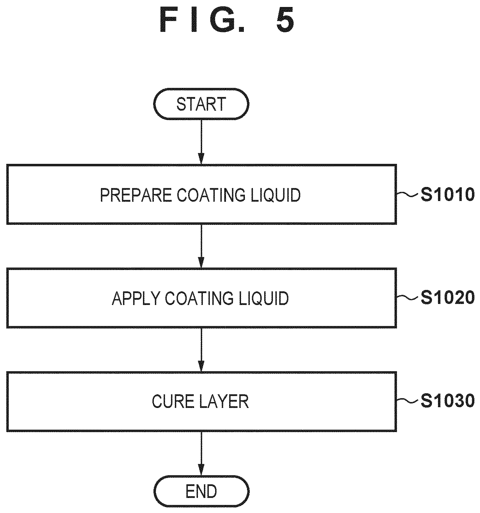

Next, a method for manufacturing the camera cover 110 by applying the coating 1500 will be described with reference to FIG. 5. In step S1010, an aliphatic urethane acrylate resin coating liquid is prepared. A coating liquid containing aliphatic urethane acrylate oligomers can be used as the coating liquid for the coating. Incidentally, the inventors of the present application found that when a commercially-available coating liquid is applied as-is to the camera cover 110, which has a complex three-dimensional shape, the uniformity of the coating drops and the resolution achieved when capturing an image through the camera cover 110 decreases. On the other hand, by controlling the thickness of the coating 1500 as described below, the uniformity of the coating 1500 can be improved while maintaining the function as the coating 1500. Accordingly, the viscosity of the coating liquid can be adjusted to vary the thickness of the coating 1500 based on the relationship between surface tension and viscosity.

Specifically, the viscosity can be adjusted by mixing and stirring an organic solvent with the coating liquid. Here, the coating liquid may be adjusted while measuring the viscosity. In one embodiment, the viscosity can be set to at least 1.5 [mPa/sec] in order to form a layer having a sufficient thickness. On the other hand, the viscosity can be set to no greater than 8.2 [mPa/sec] to reduce mottling in the layer caused by fluctuations in the thickness. In the present specification, the viscosity can be measured according to ISO 2555:2018.

In step S1020, a coating layer is formed by applying the coating liquid prepared in step S1010 to the dome 140. Although the coating device and method of applying the coating liquid are not particularly limited, in the present embodiment, spin coating using a spin coater is used to ensure more uniform application to the dome 140, which has a three-dimensional shape. However, other methods such as dip coating, spray coating, or the like may be used.

FIG. 4 is a partial cross-sectional view illustrating spin coating using a spin coater. The dome 140 can be attached to a rotating platform 3001 at the top of a spin coater 3000 via a mounting jig 3002. The dome 140 can be fixed to the mounting jig 3002 using screws or the like. The mounting jig 3002 and the rotating platform 3001 can be fixed by suction using a pump (not shown). The coating liquid can be applied from a top part 141, which is the highest position of the dome 140. As the rotating platform 3001 rotates, the coating liquid is pulled by centrifugal force in the normal direction with respect to the circumference of the rotation circle, and spreads out to the skirt part 1102.

On the other hand, centrifugal force is also applied to the coating liquid which has flowed to the skirt part 1102, and thus the resulting coating may have mottling caused by fluctuations in the thickness. Such mottling affects the resolution of the image capturing device 10, as described below. Mottling in the layer is more likely to occur at the skirt part 1102 than at the top part 141 of the dome 140, and the arithmetic mean roughness Ra increases in the areas where mottling occurs.

In the present embodiment, the viscosity of the coating liquid is adjusted to suppress the occurrence of mottling. For example, because the effect of centrifugal force increases in proportion to the weight of the liquid, the weight of the layer can be suppressed such that the centrifugal force is less than the surface tension of the coating liquid. In the present embodiment, the thickness is suppressed by suppressing the viscosity, and the weight of the layer is reduced to avoid the centrifugal force. On the other hand, by increasing the viscosity, the functions of the coating 1500 can be maintained. In this manner, by adjusting the viscosity of the coating liquid, it is possible to achieve both functionality and uniformity of the coating 1500.

In step S1030, the coating layer applied in step S1020 is cured. Because aliphatic urethane acrylate resins are photocuring resins, the coating layer can be cured through light irradiation. In the present embodiment, the coating 1500 can be fixed by evaporating an organic carrier from the coating layer through heating and drying, and then performing irradiation with ultraviolet light. The heating method is not particularly limited, and a hot-blast furnace, an electric furnace, a far-infrared furnace, a near-infrared furnace, or the like can be used to hold a heating target at a specified temperature. Additionally, the light source is not particularly limited, and an ultraviolet lamp such as a mercury lamp can be used, for example.

### Working Examples

### First Working Example

The coating liquid was produced by mixing coating liquid stock solution Z-700W-7 (manufactured by AICA Kogyo Co., Ltd.) with an organic solvent. The coating liquid stock solution Z-700W-7 contains an aliphatic urethane acrylate obtained from aliphatic diisocyanate. As an organic solvent, 1-methoxy-2-propanol (manufactured by Kishida Chemical Co., Ltd.), which is one of the components of the coating liquid stock solution Z-700W-7, was used to adjust the viscosity. The ratio of coating liquid stock solution to organic solvent was 1:4 by weight. In this manner, the coating liquid was formulated to have a viscosity of about 1.0 [mPa/sec] at room temperature of 23 [°C]. The viscosity was measured using a VISCO Package B viscometer (Atago Co., Ltd.).

The resulting coating liquid was then applied to the dome using a spin coater, dried, and UV-cured to produce the camera cover. MS-B300 (manufactured by Mikasa Co., Ltd.) was used as the spin coater. The method illustrated in FIG. 4 was used to apply 10 [mL] of the coating liquid from the top of the dome using a nozzle, and the spin coater was run at a rotational speed of 200 [rpm] and a rotation time of 30 [sec] to spread the coating liquid to the skirt part of the dome and coat the dome with the coating liquid evenly. Drying was performed by heating for 5 [min] in a circulating hot-blast furnace at 86°C + 5°C. Here, an air-cooled mercury lamp H08-L41 (manufactured by Iwasaki Electric Co., Ltd.) was used for the UV curing. In UV irradiation, UV light with a wavelength of 254 [nm] was measured to apply an energy corresponding to an illuminance of 260 [mW/mm²] and an accumulated light intensity of 3500 [mJ/mm²]. An accumulated UV meter UIT-250 (Ushio Inc.) was used to measure the amount of UV light. Because the coating liquid contains α-hydroxyalkylphenone, which is a photoinitiator, the UV irradiation resulted in polymerization, which in turn cured and fixed the coating liquid. Here, the curing of the coating liquid was accelerated by a photo-radical polymerization reaction.

The thickness of the coating was measured by identifying a sample cut from the resulting dome using a compact high-resolution spectrometer Solid Lambda UV-NIR (Spectra Co-Op), and the thickness was 1.5 [µm]. A test piece was cut from the obtained dome, and the arithmetic mean roughness Ra of the surface of the coating in the sample was measured using a scanning confocal laser microscope LEXT-OLS4500 (Olympus Corporation), with the obtained arithmetic mean roughness Ra being 0.08 [µm]. In the present working example and the following working examples, the thickness and the arithmetic mean roughness Ra refer to values measured at the skirt part of the camera cover.

The following cameras were also used to evaluate the resolution obtained by capturing images through the resulting camera covers. That is, the camera covers were mounted to a camera having a focal length of 4.25 to 170 mm, 40× optical zoom, and a maximum resolution of 1920 × 1080, and a resolution chart was placed at a distance of 30 [m] from the camera. The presence or absence of image degradation was then determined by evaluating the visual resolution of the captured resolution chart. As a result, there were no areas of degradation.

**In** addition, the weather resistance of the coating was evaluated according to JIS B7754. Specifically, a Super Xenon Weather Meter SX75 (Suga Test Instruments Co., Ltd.) was used as the weather resistance test instrument. As an accelerated test, samples cut from the dome were exposed to light at an illuminance of 180 [W/m²] for up to 600 hours, and the samples were evaluated. However, it was confirmed that layer peeling occurred after approximately 500 hours. Microscopic observation confirmed that the dome was cracked and the coating was lifting at those parts. This peeling is thought to have been caused by cracks in the dome due to light-induced deterioration of the dome. In other words, it is thought that the dome substrate experienced photodegradation because the function of the coating was not fully achieved due to the low thickness, and light that was not absorbed by the UV absorbing material contained in the coating reached the dome substrate.

### Second Working Example

The camera covers were manufactured and evaluated in the same manner as in the first working example, except that the ratio of coating liquid stock solution to organic solvent was set to 1:3.5 by weight.

### Third Working Example

The camera covers were manufactured and evaluated in the same manner as in the first working example, except that the ratio of coating liquid stock solution to organic solvent was set to 1:3 by weight.

### Fourth Working Example

The camera covers were manufactured and evaluated in the same manner as in the first working example, except that the ratio of coating liquid stock solution to organic solvent was set to 1:2.5 by weight.

### Fifth Working Example

The camera covers were manufactured and evaluated in the same manner as in the first working example, except that the ratio of coating liquid stock solution to organic solvent was set to 1:2.0 by weight.

### Sixth Working Example

The camera covers were manufactured and evaluated in the same manner as in the first working example, except that the ratio of coating liquid stock solution to organic solvent was set to 1:1.5 by weight.

### Seventh Working Example

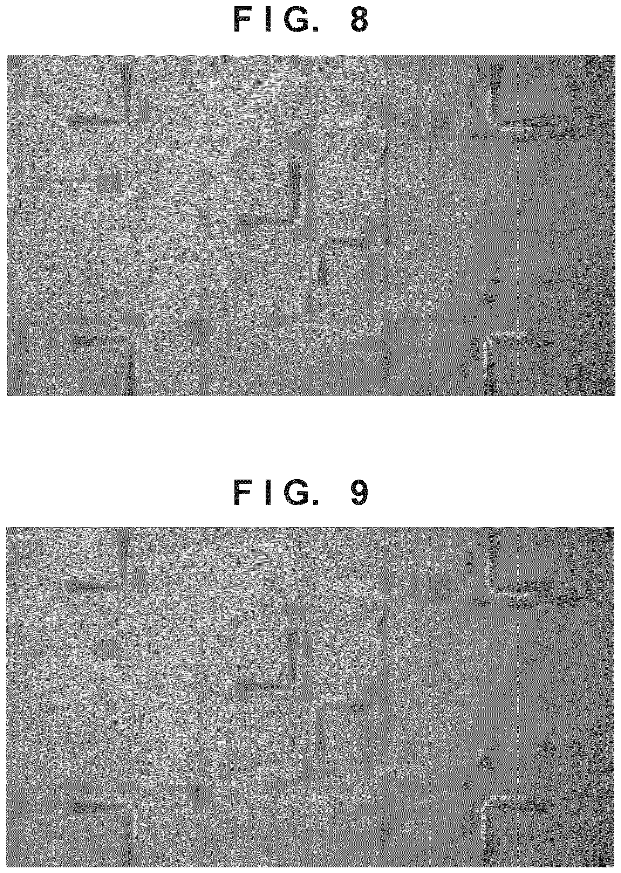

The camera covers were manufactured and evaluated in the same manner as in the first working example, except that the ratio of coating liquid stock solution to organic solvent was set to 1:1 by weight. FIG. 8 illustrates the results of the resolution evaluation in the seventh working example.

### Eighth Working Example

The camera covers were manufactured and evaluated in the same manner as in the first working example, except that the ratio of coating liquid stock solution to organic solvent was set to 1:0.8 by weight. FIG. 9 illustrates the results of the resolution evaluation in the eighth working example.

### Ninth Working Example

The camera covers were manufactured and evaluated in the same manner as in the first working example, except that the ratio of coating liquid stock solution to organic solvent was set to 1:0.6 by weight.

### Tenth Working Example

The camera covers were manufactured and evaluated in the same manner as in the first working example, except that the ratio of coating liquid stock solution to organic solvent was set to 1:0.5 by weight.

### Eleventh Working Example

The camera covers were manufactured and evaluated in the same manner as in the first working example, except that the ratio of coating liquid stock solution to organic solvent was set to 1:0.2 by weight.

### Twelfth Working Example

The camera covers were manufactured and evaluated in the same manner as in the first working example, except that the coating liquid stock solution was applied to the dome using a spin coater.

The table below summarizes the evaluation results from the first to twelfth working examples. In the table below, a weather resistance of "∘" indicates that no peeling was observed after 600 hours of light irradiation in the weather resistance test, and no particular anomalies were observed. A weather resistance of "x" indicates that peeling was observed after 600 hours of light irradiation. A resolution of "∘" indicates that no image degradation was observed in the resolution evaluation, whereas a resolution of "x" indicates that clear image degradation was observed in the resolution evaluation.

**Table 1**

| Working Example | Viscosity [mPa/sec] | Thickness [µm] | Arithmetic mean roughness Ra [µm] | Evaluation result | |
|---|---|---|---|---|---|
| | | | | Weather resistance | Resolution |
| 1 | 1.0 | 1.5 | 0.08 | x | ○ |
| 2 | 1.9 | 2.1 | 0.09 | ○ | ○ |
| 3 | 3.8 | 3.5 | 0.11 | ○ | ○ |
| 4 | 4.4 | 4.4 | 0.10 | ○ | ○ |
| 5 | 5.8 | 6.0 | 0.22 | ○ | ○ |
| 6 | 7.0 | 7.5 | 0.72 | ○ | ○ |
| 7 | 8.0 | 9.3 | 0.80 | ○ | ○ (FIG. 8) |
| 8 | 8.4 | 10.1 | 0.82 | ○ | x (FIG. 9) |
| 9 | 8.9 | 10.5 | 0.86 | ○ | x |
| 10 | 9.2 | 11.2 | 0.90 | ○ | x |
| 11 | 9.5 | 12.0 | 1.00 | ○ | x |
| 12 | 10.1 | 12.8 | 1.40 | ○ | x |

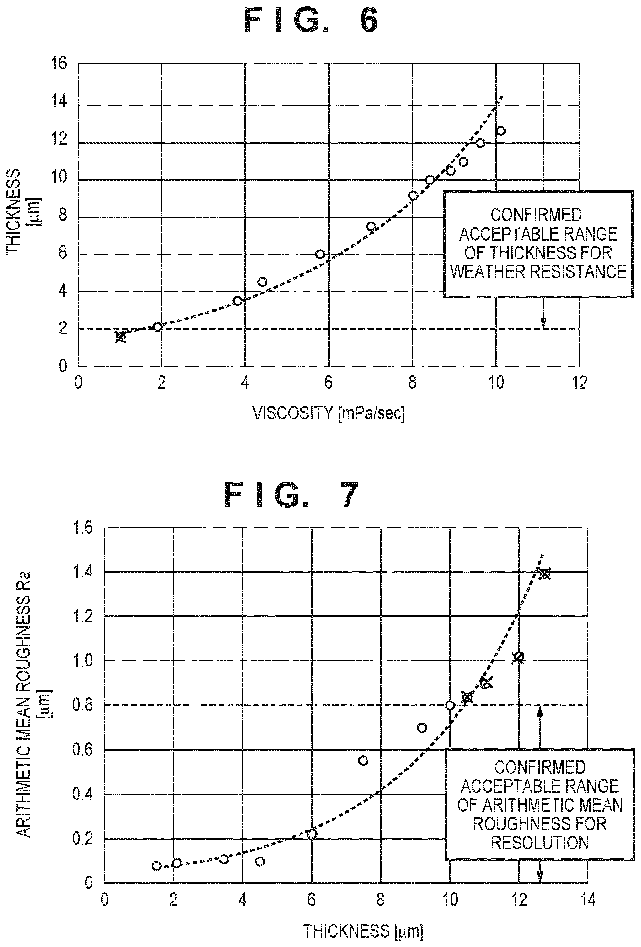

FIG. 6 illustrates a relationship between the viscosity of the coating liquid and the thickness of the resulting coating in the first to twelfth working examples. Additionally, FIG. 7 illustrates a relationship between the thickness of the coating and the arithmetic mean roughness Ra in the first to twelfth working examples.

As indicated in the table above, when the arithmetic mean roughness Ra of the coating surface was no greater than 0.8 [µm], no image degradation was observed in the resolution evaluation, while when the arithmetic mean roughness Ra was at least 0.84 [µm], clear degradation was observed in the resolution evaluation. As indicated in FIG. 7, the greater the coating thickness was, the higher the arithmetic mean roughness Ra tended to be, and by making the coating thickness be no greater than 10 [µm], the arithmetic mean roughness Ra was successfully kept to be no greater than 0.8 [µm]. Furthermore, as indicated in FIG. 6, the higher the viscosity of the coating liquid was, the higher the coating thickness tended to be, and by making the viscosity of the coating liquid be less than 8.4 [mPa/sec], the coating thickness was no greater than 10 [µm].

Furthermore, high weather resistance of the camera cover was confirmed when the thickness of the coating was at least 2 µm, while anomalies arose in the camera cover during the weather resistance test when the thickness of the coating was 1.5 µm. Accordingly, the function of the coating was fully achieved by setting the thickness of the coating to 2 µm or more. By increasing the viscosity of the coating liquid to higher than 1.0 [mPa/sec], the thickness of the coating was successfully increased to at least 2 [µm].

According to the examinations in each working example, the arithmetic mean roughness Ra was higher at the skirt part of the camera cover than at the top part. Therefore, an arithmetic mean roughness Ra of no greater than 0.8 [µm] at the skirt part means that the arithmetic mean roughness Ra at the top part is also no greater than 0.8 [µm], and that the arithmetic mean roughness Ra is no greater than 0.8 [µm] across the entire outer surface of the camera cover.

Additionally, according to the examinations in each working example, the thickness was lower at the top part of the camera cover than at the skirt part. When the viscosity of the coating liquid was low, there was no significant difference in the thickness between the skirt part and the top part, but when the viscosity of the coating liquid was high, there was a tendency for the difference in thickness between the skirt part and the top part to increase. Accordingly, a coating thickness of no greater than 10 [µm] at the skirt part means that the thickness at the top part is also no greater than 10 [µm], and that the thickness on the entire outer surface of the camera cover is no greater than 10 [µm]. On the other hand, in the second working example, the thickness at the skirt part and the thickness at the top part were the same. Therefore, a coating thickness of at least 2 [µm] at the skirt part means that the thickness at the top part is also at least 2 [µm], and that the thickness on the entire outer surface of the camera cover is at least 2 [µm].

Based on the above results, forming a coating containing urethane acrylate resin on the surface of a camera cover such that the arithmetic mean roughness Ra of the surface is no greater than 0.8 [µm] makes it possible to obtain a camera cover and an image capturing device that can achieve good resolution.

While the present invention has been described with reference to exemplary embodiments, it is to be understood that the invention is not limited to the disclosed exemplary embodiments. A camera cover (110) is provided. The camera cover (110) has a coating (1500) formed on a surface of the camera cover (110). The coating (1500) contains a an aliphatic urethane acrylate resin. The camera cover (110) has a dome shape and is designed to protect an image capturing unit (100). An arithmetic mean roughness Ra of a surface of the coating (1500) is no greater than 0.8 µm.

## Claims

1. A camera cover (110) comprising:
a coating (1500) formed on a surface of the camera cover (110), the coating (1500) containing an aliphatic urethane acrylate resin,
wherein the camera cover (110) has a dome shape and is designed to protect an image capturing unit (100), and
an arithmetic mean roughness Ra of a surface of the coating (1500), measured according to JIS B0601:2013, is no greater than 0.8 µm.

2. The camera cover (110) according to claim 1,
wherein a thickness of the coating (1500) is at least 2 µm and no greater than 10 µm, determined using a compact high-resolution spectrometer Solid Lambda UV-NIR.

3. The camera cover (110) according to claim 1 or 2,
wherein the aliphatic urethane acrylate resin contains a photo-radical polymerization initiator.

4. The camera cover (110) according to claim 3,
wherein the photo-radical polymerization initiator is α-hydroxyalkylphenone.

5. The camera cover (110) according to any one of claims 1 to 4,
wherein the camera cover (110) is made of a polycarbonate resin.

6. An image capturing device comprising:
an image capturing unit (100); and
the camera cover (110) according to any one of claims 1 to 5, wherein the camera cover (110) contains the image capturing unit (100).

7. A method of manufacturing a camera cover (110), the method comprising:
preparing (S1010) an aliphatic urethane acrylate resin coating (1500) liquid;
forming (S1020) a coating (1500) layer by applying the coating (1500) liquid to a camera cover substrate (140) having a dome shape; and
curing (S1030) the coating (1500) layer,
wherein an arithmetic mean roughness Ra of a surface of the coating (1500) layer after curing, measured according to JIS B0601:2013, is no greater than 0.8 µm.

8. The method of manufacturing the camera cover (110) according to claim 7,
wherein the forming (S1020) of the coating (1500) layer includes spin coating (1500) of the coating (1500) liquid on the camera cover substrate (140).

9. The method of manufacturing the camera cover (110) according to claim 7 or 8,
wherein the forming (S1020) of the coating (1500) layer includes applying the coating (1500) liquid having a viscosity, measured according to ISO 2555:2018, of at least 1.5 mPa/sec and no greater than 8.2 mPa/sec.

## Patentansprüche

1. Kameraabdeckung (110), umfassend:
eine auf einer Oberfläche der Kameraabdeckung (110) ausgebildete Beschichtung (1500), wobei die Beschichtung (1500) ein aliphatisches Urethan-Acrylat-Harz enthält,
wobei die Kameraabdeckung (110) eine Kuppelform aufweist und zum Schutz einer Bildaufnahmeeinheit (100) ausgelegt ist, und
die gemäß JIS B0601:2013 gemessene arithmetische mittlere Rauheit Ra einer Oberfläche der Beschichtung (1500) nicht größer als 0,8 µm ist.

2. Kameraabdeckung (110) nach Anspruch 1,
wobei die Dicke der Beschichtung (1500) , bestimmt unter Verwendung eines kompakten hochauflösenden Spektrometers Solid Lambda UV-NIR, mindestens 2 µm und nicht größer als 10 µm ist.

3. Kameraabdeckung (110) nach Anspruch 1 oder 2,
wobei das aliphatische Urethan-Acrylat-Harz einen Initiator für die photoradikalische Polymerisation enthält.

4. Kameraabdeckung (110) nach Anspruch 3,
wobei der Initiator für die photoradikalische Polymerisation α-Hydroxyalkylphenon ist.

5. Kameraabdeckung (110) nach einem der Ansprüche 1 bis 4,
wobei die Kameraabdeckung (110) aus einem Polycarbonat-Harz besteht.

6. Bildaufnahmevorrichtung, umfassend:
eine Bildaufnahmeeinheit (100); und
die Kameraabdeckung (110) nach einem der Ansprüche 1 bis 5, wobei die Kameraabdeckung (110) die Bildaufnahmeeinheit (100) enthält.

7. Verfahren zur Herstellung einer Kameraabdeckung (110), wobei das Verfahren umfasst:
Zubereiten (S1010) einer flüssigen Beschichtung (1500) aus aliphatischem Urethan-Acrylat-Harz;
Bilden (S1020) einer Beschichtungsschicht (1500) durch Aufbringen der Beschichtungsflüssigkeit (1500) auf ein kuppelförmiges Kameragehäuse-Substrat (140); und
Aushärten (S1030) der Beschichtungsschicht (1500),
wobei eine arithmetische mittlere Rauheit Ra einer Oberfläche der Beschichtungsschicht (1500) nach dem Aushärten, gemessen gemäß JIS B0601:2013, nicht größer als 0,8 µm ist.

8. Verfahren zur Herstellung der Kameraabdeckung (110) nach Anspruch 7,
wobei das Bilden (S1020) der Beschichtungsschicht (1500) das Schleuderbeschichten (1500) der Beschichtungsflüssigkeit (1500) auf das Kameraabdeckungssubstrat (140) umfasst.

9. Verfahren zur Herstellung der Kameraabdeckung (110) nach Anspruch 7 oder 8,
wobei das Bilden (S1020) der Beschichtungsschicht (1500) das Aufbringen der Beschichtungsflüssigkeit (1500) mit einer Viskosität, gemessen gemäß ISO 2555:2018, von mindestens 1,5 mPa/s und höchstens 8,2 mPa/s umfasst.

## Revendications

1. Couvercle d'appareil de prise de vues (110) comprenant :
un revêtement (1500) formé sur une surface du couvercle de dispositif de prise de vues (110), le revêtement (1500) contenant une résine acrylate d'uréthane aliphatique,
dans lequel le couvercle de dispositif de prise de vues (110) a une forme de dôme et est conçu pour protéger une unité de capture d'image (100), et
une rugosité moyenne arithmétique Ra d'une surface du revêtement (1500), mesurée selon la norme JIS B0601:2013, n'est pas supérieure à 0,8 µm.

2. Couvercle d'appareil de prise de vues (110) selon la revendication 1,
dans lequel une épaisseur du revêtement (1500) est d'au moins 2 µm et n'est pas supérieure à 10 µm, déterminée à l'aide d'un spectromètre haute résolution compact Solid Lambda UV-NIR.

3. Couvercle d'appareil de prise de vues (110) selon la revendication 1 ou 2,
dans lequel la résine acrylate d'uréthane aliphatique contient un initiateur de polymérisation photo-radicalaire.

4. Couvercle d'appareil de prise de vues (110) selon la revendication 3,
dans lequel l'initiateur de polymérisation photo-radicalaire est α-hydroxyalkylphénone.

5. Couvercle d'appareil de prise de vues (110) selon l'une quelconque des revendications 1 à 4,
dans lequel le couvercle de dispositif de prise de vues (110) est constitué d'une résine de polycarbonate.

6. Dispositif de capture d'image comprenant :
une unité de capture d'image (100) ; et
le couvercle de dispositif de prise de vues (110) selon l'une quelconque des revendications 1 à 5, dans lequel le couvercle de dispositif de prise de vues (110) contient l'unité de capture d'image (100).

7. Procédé de fabrication d'un couvercle de dispositif de prise de vues (110), le procédé comprenant :
la préparation (S1010) d'un liquide de revêtement (1500) en résine acrylate d'uréthane aliphatique ;
la formation (S1020) d'une couche de revêtement (1500) en appliquant le liquide de revêtement (1500) sur un substrat de couvercle de dispositif de prise de vues (140) ayant une forme de dôme ; et
le durcissement (S1030) de la couche de revêtement (1500), dans lequel une rugosité moyenne arithmétique Ra d'une surface de la couche de revêtement (1500) après durcissement, mesurée selon la norme JIS B0601:2013, n'est pas supérieure à 0,8 µm.

8. Procédé de fabrication du couvercle de dispositif de prise de vues (110) selon la revendication 7,
dans lequel la formation (S1020) de la couche de revêtement (1500) comporte le revêtement par centrifugation (1500) du liquide de revêtement (1500) sur le substrat de couvercle de dispositif de prise de vues (140).

9. Procédé de fabrication du couvercle de dispositif de prise de vues (110) selon la revendication 7 ou 8,
dans lequel la formation (S1020) de la couche de revêtement (1500) comporte l'application du liquide de revêtement (1500) ayant une viscosité, mesurée selon la norme ISO 2555:2018, d'au moins 1,5 mPa/s et non supérieure à 8,2 mPa/s.
